# EUROPEAN PATENT APPLICATION

(11) **EP 1 176 649 A1**
(43) Date of publication of application: **30.01.2002**
(21) Application number: 00500165.6
(22) Date of filing: 24.07.2000
(51) Int. Cl.: H01M 4/32, H01M 4/52, H01M 10/30, H01M 10/44

(54) **An alkaline secondary battery with an improved positive nickel electrode and procedure for its activation**

(71) Applicant: SOCIEDAD ESPANOLA DEL ACUMULADOR TUDOR, S.A., E-28027 Madrid (ES); S.C.P.S. Société de Conseil et de Prospective Scientifique, 93115 Rosny-sous. Bois cedex (FR)
(72) Inventor: Bugnet, Bernard, 94420 Le Plessis Trévise (FR); Soria Garcia-Ramos, Ma Luisa, 28033 Madrid (ES); Joubert, Frédéric Pierre, 91330 Yerres (FR)
(74) Representative: Davila Baz, Angel

(57) **Abstract**

Alkaline secondary battery having an improved positive nickel electrode, and its activation process, of the Ni/MH, Ni/Cd, Ni/Zn or Ni/Fe type, comprising an improved positive nickel pasted electrode, a negative electrode, an alkaline electrode, a separator and a plastic or metallic container. The positive electrode comprises a high tap density irregular shaped nickel hudroxide as active material and having hammered irregularities in its crystalline structure which is doped with Co and Zn in a range of 0.5 and 5 % in both cases, a three-dimensional metallic structure as conductive substrate of the foam or nickel fiber, and which has a porosity of 90 to 96%, preferably between 94 and 96%, as well as additives to improve the rhoelogical characteristics and electric conductivity of the electrode in a range of 7 to 40%.

## Description

### Field of the Invention.

The present invention relates to an alkaline secondary battery which includes an improved positive nickel pasted type electrode, and a method for activating and forming the gamma-phase of the positive nickel active material in the charged state.

Said activated electrode, prepared with a high tap density irregular shaped nickel hydroxide as active material, is characterised by a multiple electron transfer between the beta-phase and the gamma-phase during electrochemical charge/discharge cycling, which increases the capacity and therefore the energy density of positive nickel electrodes used in alkaline secondary batteries.

The invention also describes the performances of a Nickel-Metal Hydride (Ni-MH) battery using the aforesaid positive electrode, when tested at high charge/discharge rates, simulating high power applications such as the electric or hybrid vehicles.

### Background of the invention.

Rapid advancements in electronic technology have expanded the number of battery-powered portable devices in recent years, stimulating the consumer demand for higher energy rechargeable batteries, capable of providing longer service between recharges or battery replacements.

Thus, great efforts have been made to improve the performances of alkaline secondary batteries, especially on Nickel-Metal Hydride batteries that appear to be a suitable substitute for conventional Nickel-Cadmium battery by offering significant improvements in terms of performances and environmental friendliness, as they contain no added cadmium.

Moreover, latest technology and development progresses have allowed nickel-metal hydride batteries to be one of the best candidates for some emerging applications such as hybrid or electric vehicles which require high peak power, quick charge, high capacity and long cycle life.

As known, nickel-metal hydride battery includes within a plastic or metallic case, a stack of positive electrodes mainly composed of nickel hydroxide and negative electrodes mainly composed of a hydrogen-absorbing alloy, a separator to avoid electronic contact between both electrode types, and an alkali electrolyte to assure ionic conductivity between them.

Negative metal hydride electrodes are usually composed of mischmetal based alloys or transition metals, both able to store reversibly hydrogen through an electrochemical absorption process. Nowadays, commercial mischmetal based alloys present an active material capacity of about 320 mAh/g, and transition metal based alloys a capacity of about 385 mAh/g. Moreover, at laboratory scale, some alloy families have demonstrated capacity over 550 mAh/g (*Advanced Materials for 100*+ *Wh/kg NiMH Batteries, Ovonic Battery Company, Sixteenth International Seminar of Primary and Secondary Batteries, Ft. Lauderdale, Florida, March 2, 1999).*

However, conventional positive nickel electrodes, whose main component is a material based on nickel hydroxide (Ni(OH)₂), have a theoretical active material capacity of 289 mAh/g, corresponding to a transfer of one electron between the beta nickel hydroxide reduced form (discharged state) and the beta nickel oxyhydroxide oxidised form (charged state). In order to maintain the optimum cell capacity and provide overcharge protection, charge capacity of metal hydride is provided in excess. Therefore the amount of active material and the charging efficiency of the positive nickel electrode limit the Ni-MH battery capacity.

For this reason, considerable research works have been conducted during the last decade in order to increase the density energy of the Ni-MH battery and more especially the density energy of the positive electrode. In this way, progress in weight and porosity of the positive electrode substrate has been performed by substituting the sintered type electrode by the pasted type one.

As known, in such batteries, the positive active material is composed of β-Ni(OH)₂ and β-NiOOH as the cell is discharged or charged respectively, because these structures are the most stable in alkali electrolyte. During cycling, one electron is transferred and the theoretical specific capacity of the nickel hydroxide active material based on this reaction is 289 mAh/g. It is common to consider the active material utilisation as 100% when the electrode shows this theoretical capacity.

However, as disclosed in *J*. *Power Sources, 12, 219, (1984)*, it can be observed sometimes electrodes having the active material utilisation ratio exceeding 100%. Such high active material utilisation is due to the formation of a new oxidised phase, the γ-NiOOH, during the charging process. Indeed, with regards to β-NiOOH in charged state, if the charging is conducted in a low temperature environment or charging is conducted for a long period of time, or usual overcharging is repeated, a part of the β-NiOOH is oxidised to form γ-NiOOH having a higher Ni oxidation state. Therefore, in contrast to Beta-phase cycling, Alpha to Gamma phases cycling appears to involve the transfer of at least 1.5 electrons *(J. Power Sources, 8, 229, 1982)*. Such multiple electron transfer leads to a higher electrode capacity. However, electrode capacity beyond the oneelectron transfer theoretical capacity is not usually observed. In fact, the reduced nickel hydroxide material has a high electronic resistance, which forms during the discharge a less conductive surface near the substrate. Consequently, the nickel particles far away from the current collector do not participate in the reduction of oxidised active material, thus limiting the electrode capacity.

Moreover, when γ-NiOOH at charged state is accumulated without being discharged, the positive electrode absorbs substances such as cations, anions and water molecules that expand its crystal structure. Therefore, the electrode is swollen and its thickness increases. Besides, as the difference in density between the charged gamma-phase and the discharged beta-phase is important, the active material repeats its expansion and shrinkage, which leads to capacity losses and increase of the internal resistance that make discharge impossible. So, various ways to suppress the formation of γ-NiOOH have been used in the past by adding compounds such as cobalt, cadmium and zinc to the active material formulation *(J. of Applied Electrochem., 16, 403, 1986).*

Contrary to this approach, a number of studies have been made with the aim of making a good use of this γ-NiOOH which allows achieving a still higher energy density of positive electrodes.

For example, Matsushita in *European patents 0 872 904 and mainly in 0 869 565* discloses, from the point of view of the active material side, a spherical nickel hydroxide incorporating a higher oxidised compound forming element such as Mn into the nickel hydroxide. As such oxides are readily charged into a higher oxidised nickel oxide, they increase the discharging reaction valence and so the specific energy density of positive electrodes. However, even though interesting results of high utilisation rate of the active material are presented, no data referring to the cycle life of the battery is mentioned. Usually, in many works referring to a high utilisation ratio of the nickel active material in the early life of the electrode, over 100% utilisation rate which indicates gamma-phase formation, no-one has yet mentioned good results in terms of cycle life, since gamma-phase has a deleterious effect on battery cycling performances.

This fact can lead to a questionable trade-off between an early high utilisation ratio of the active material and the degraded cycle life capability of the electrode.

In order to achieve high ratio of utilisation material, Ovshinsky's team that pioneered the development of the first commercial Nickel-Metal Hydride battery by applying his fundamental principles of disorder, have developed positive electrode materials that have demonstrated reliable transfer of more than one electron per nickel atom. Such materials are described in *US patents 5,344,728 and 5,348,822.* Recently, Ovshinsky and his team have referred in *US patent 5,905,003* to a new spherical nickel hydroxide active material being characterised by the ability to reversibly cycle between the beta and the gamma nickel hydroxide crystalline phases during charge and discharge. Moreover, this positive active material, made by an ultrasonic precipitation method, is characterised by a high degree of local ordering of the hydroxyl ions. As mentioned, a cylindrical "C" size cell, using this nickel hydroxide material, has performed 82 cycles with no loss of capacity. The nickel hydroxide material has achieved a capacity of 261 mAh/g of pasted material at the 82^{th} cycle. Even though improvements have been performed, the cycle life of the battery still remains limited. Besides, the characteristics of the battery in terms of high charge or high discharge rates are not mentioned.

### Basis of the Invention

In order to respond at the strong demand for still higher energy density and efficiency in the positive electrode, and in order to solve the above-mentioned problems, we have focused our research on a positive nickel electrode able to perform a long cycle life between the phase β-Ni(OH)₂ and the phase γ-NiOOH. On the other side, while spherical shape high density nickel hydroxides are well adapted to cylindrical cells (spirally wound electrodes maintained under pressure when fitted inside the cylindrical can of the cell), they are not really suitable for prismatic large capacity types. Indeed, they lead to an important shedding of the active material from the planar electrodes and therefore, an important loss of capacity on cycling is observed.

For this reason, in the present invention it has been considered better to use an irregular shaped nickel hydroxide, more suitable for large prismatic electrodes used in high power alkaline storage batteries. This material can be advantageously produced by an electrodialytic process as described in the *patent FR 92.02873.* However, its utilisation as electrode active material has not been described previously. Compared to existing chemical techniques, the above electrodialytic process leads to the formation of few effluents, since Ni²⁺ and OH⁻ ions are produced respectively by dissolution of nickel on the anode and water dissociation on the cathode.

The nickel hydroxide material, which is manufactured thanks to the above process, is a beta-form, with a high tap density and high surface area. It can be doped with cobalt, cadmium, zinc, and manganese. Compared to commercial reference Ni(OH)₂, this material contains much more crystallite defects such as protonic vacancies and stacking faults, and therefore the degree of disorder is 10-20 times larger. Raman and IR spectroscopies show the adsorption of inorganic anions onto the border of the crystallites as alternative source of crystallite distortions. Such complex nickel hydroxide was defined "highly defective". All these characteristics should play a key role in the kinetics of the electrochemical reactions occurring during charging and discharging the material *(J. Power Source 87, 2000, 125-136).*

### Summary of the invention.

On the basis of the aforementioned, the present invention provides a prismatic alkaline storage battery (Nickel-Metal Hydride) that comprises an improved positive pasted type nickel electrode, and the activation process which leads to a discharged capacity of about 320 mAh/g of nickel hydroxide active material during more than 200 cycles.

According to the present invention, this aforesaid positive electrode is characterised by a high tap density irregular shaped nickel hydroxide as active material, that is capable to reversibly cycle between the β-Ni(OH)₂ and the γ-NiOOH during an improved cycle life.

The invention also describes the performances of a Nickel-Metal Hydride (Ni-MH) battery using the aforesaid positive electrode, when tested at high charge/discharge rates, simulating high power applications such as the electric or hybrid vehicles.

### Purposes of the invention

In accordance with the aforementioned, the invention provides, in a first aspect, an alkaline secondary battery, such as Ni-MH, Ni-Cd, Ni-Zn, or Ni-Fe, which comprises an improved positive pasted type nickel electrode, a negative electrode, an alkaline electrolyte, a separator and a plastic or metallic container, wherein the said positive electrode includes a high tap density irregular shaped nickel hydroxide as active material, with defects in the crystalline structure and doped in Co and Zn in a range of 0.5 to 5% in both cases, a three-dimensional metallic network as conductive substrate such as nickel foam or nickel fibre which presents a porosity of 90 to 96%, preferably 94 to 96%, and which also includes additives in a total range of 7 to 40% in order to improve electrode paste rheology and electroconductivity.

According to a preferred embodiment of the invention, the positive electrode paste formulation comprises cobalt compounds, such as cobalt powder or cobalt monoxide or a mixture of both, in a range of 0.5 to 10 wt.% referred to nickel hydroxide, preferably 1 to 5%, metallic nickel powder in a range of 5 to 15%, preferably 10 to 15%, a suspension of polytetrafluoretylene in a range of 1 to 10%, preferably 3 to 6%, and arabic gum, carboxymethylcellulose, ethylcellulose o hydroxypropyl methylcellulose in a range of 0.1 to 5%, preferably 0.5 to 2%.

According to another preferred embodiment of the invention, the alkaline electrolyte is selected amongst any of an aqueous sodium hydroxide solution, an aqueous potassium hydroxide, a mixed aqueous solution of sodium hydroxide and potassium hydroxide, and a mixed aqueous solution of at least one member selected from the group consisting of sodium hydroxide and potassium hydroxide and at least one member selected from the group consisting of rubidium, cesium and lithium hydroxide, in concentration comprised between 4 and 12 mol/l, preferably between 4.5 and 9 mol/l.

In accordance with a second aspect, the invention provides an activation process of the said secondary alkaline battery in order to reach a specific capacity higher than the expected theoretical one corresponding to the transfer of one electron between the beta-phases of the nickel hydroxide and the nickel oxyhydroxide (β-Ni(OH)₂ and β-NiOOH respectively), which involves the reversible transformation of the β-Ni(OH)₂ to γ-NiOOH phases, and comprises the following steps:
- A first step, including at least two but no more than five charge/discharge cycles, carried out with charges at a rate comprised between 0.05 and 1C, preferably between 0.1 and 0.3C, being C the theoretical capacity of the battery, up to 140% of theoretical capacity, and discharges at a rate comprised between 0.1 and 0.3C, preferably at 0.2C down to 0.9 V; and
- A second step, including at least five constant current cycles, carried out with charges at a rate comprised between 0.5 and 3C, preferably between 1 and 1.5C, up to 140% of theoretical capacity, and initial discharges at a rate comprised between 0.5 and 2C, preferably between 1 and 1.5C, and residual discharge at a rate 0.2C down to 0.6 V;
- During the aforementioned activation process, the concentration of the alkaline hydroxide dissolution used as electrolyte, is modified in the range of 4 to 12 mol/l, preferably between 4.5 and 9 mol/l.

### Brief description of the figures.

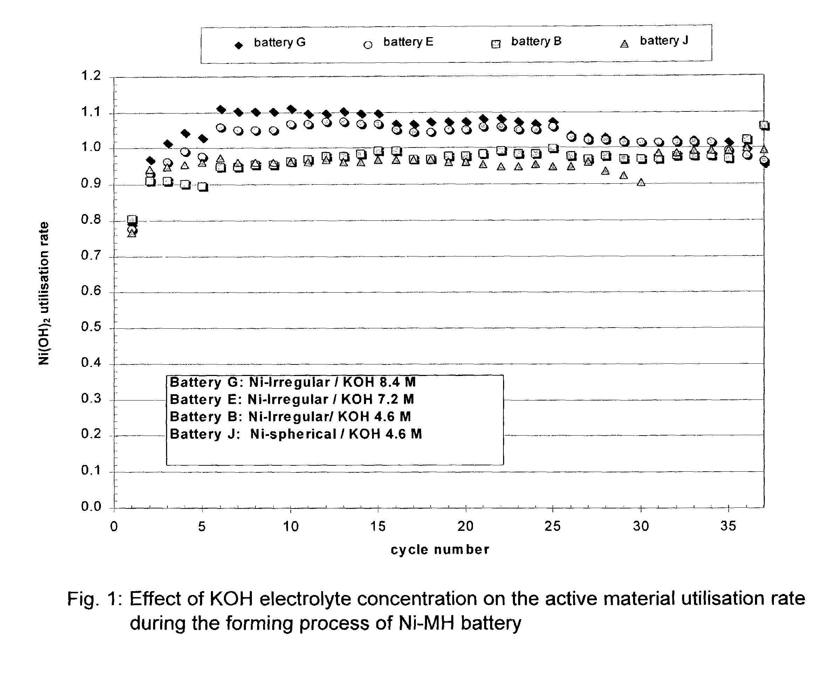

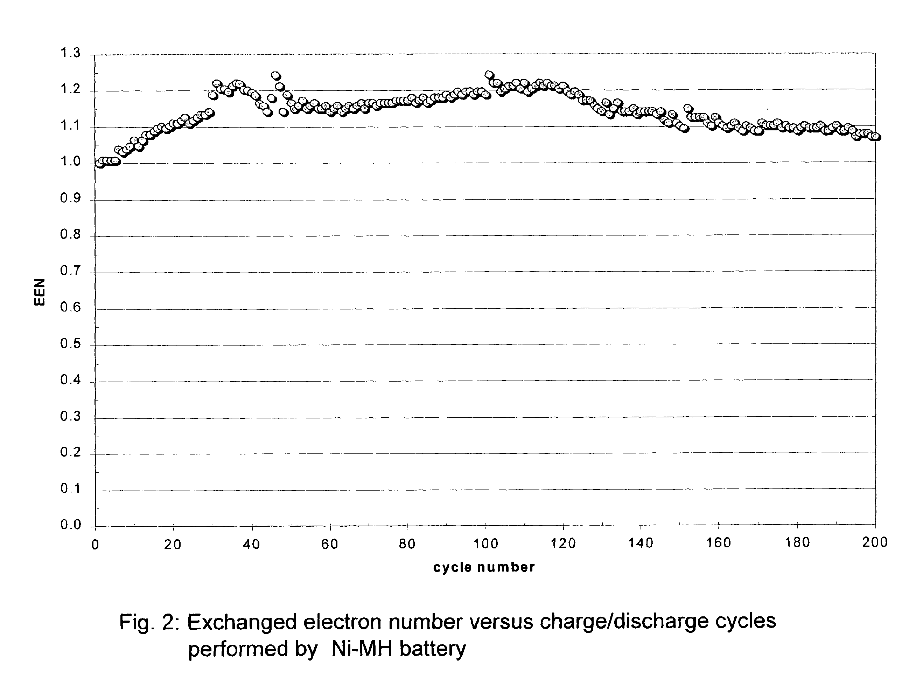

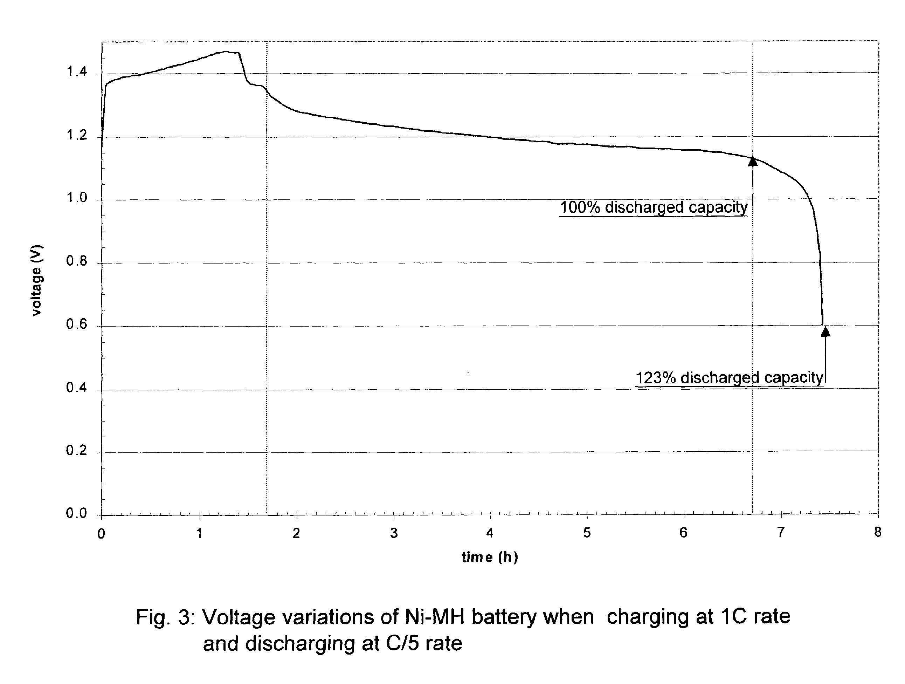

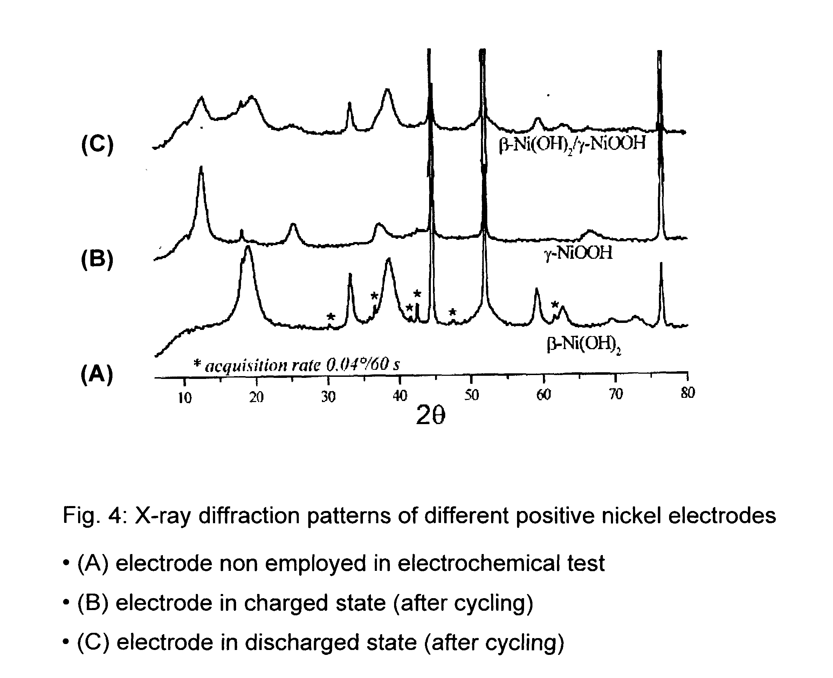

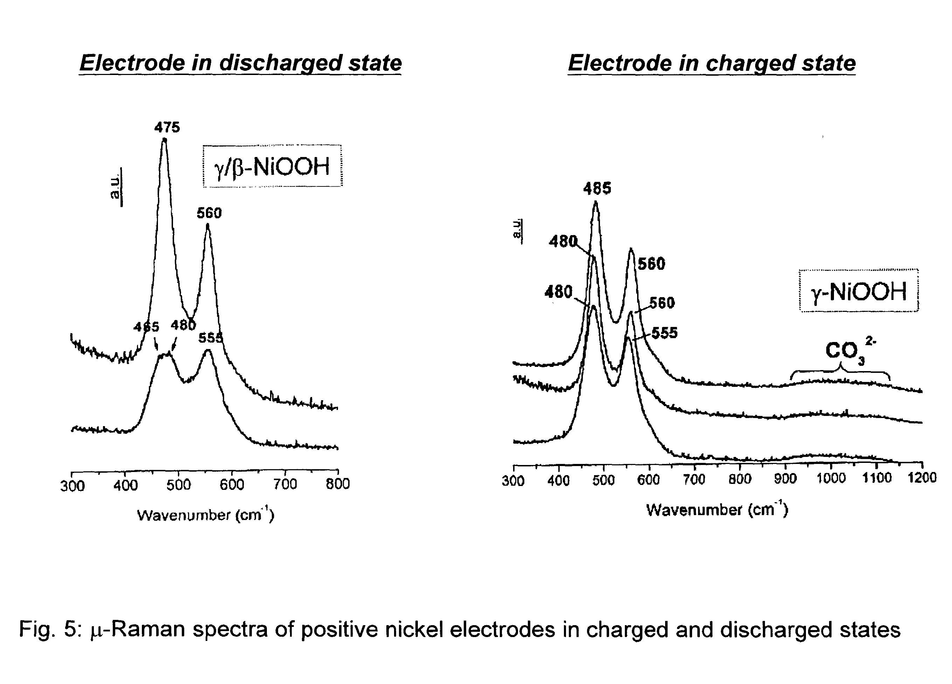

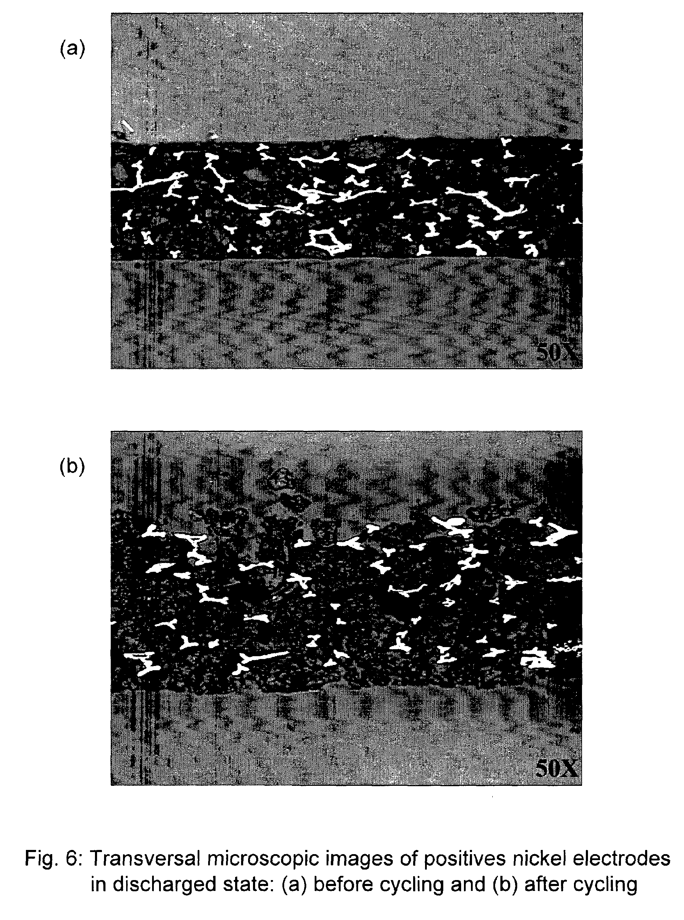

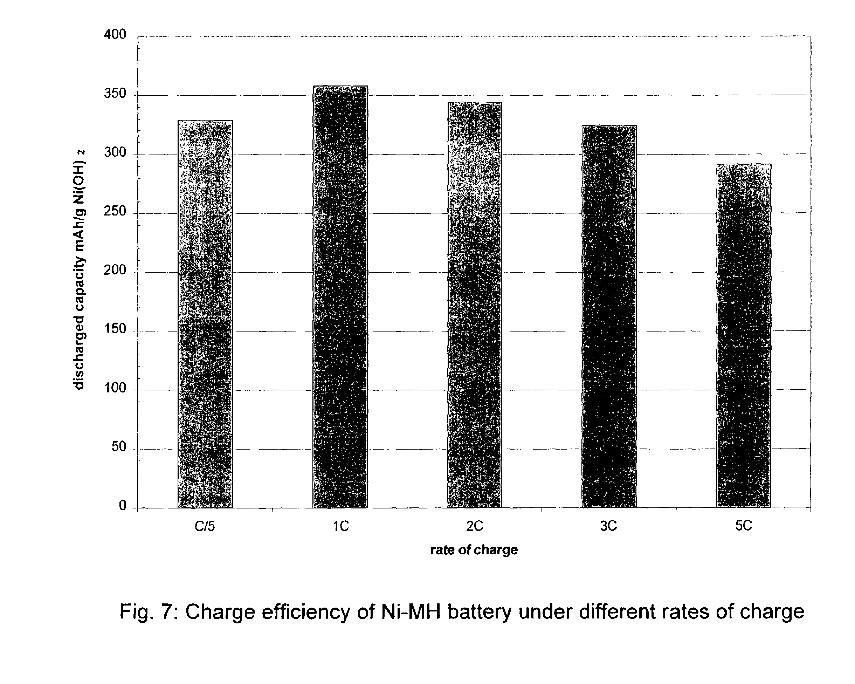

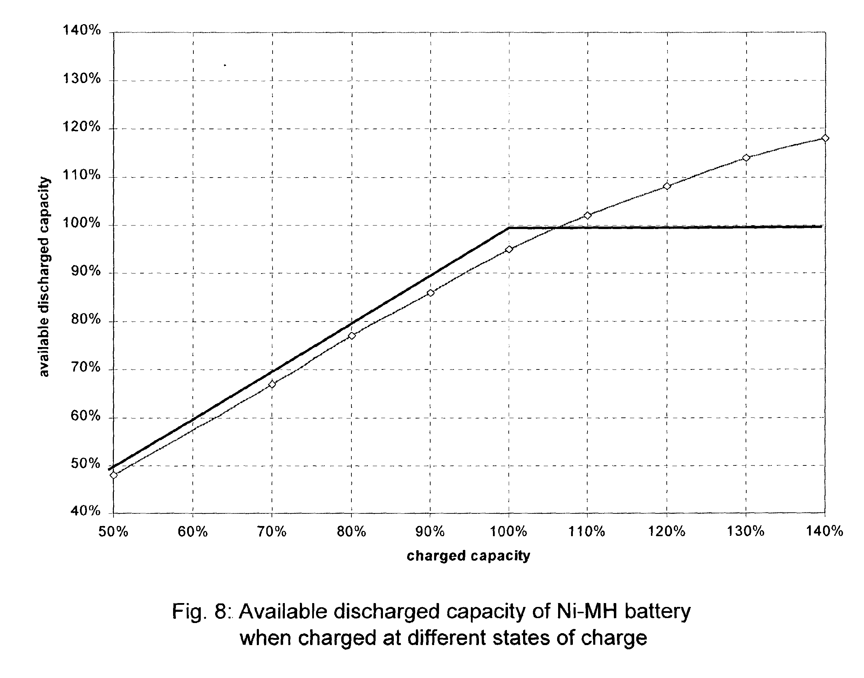

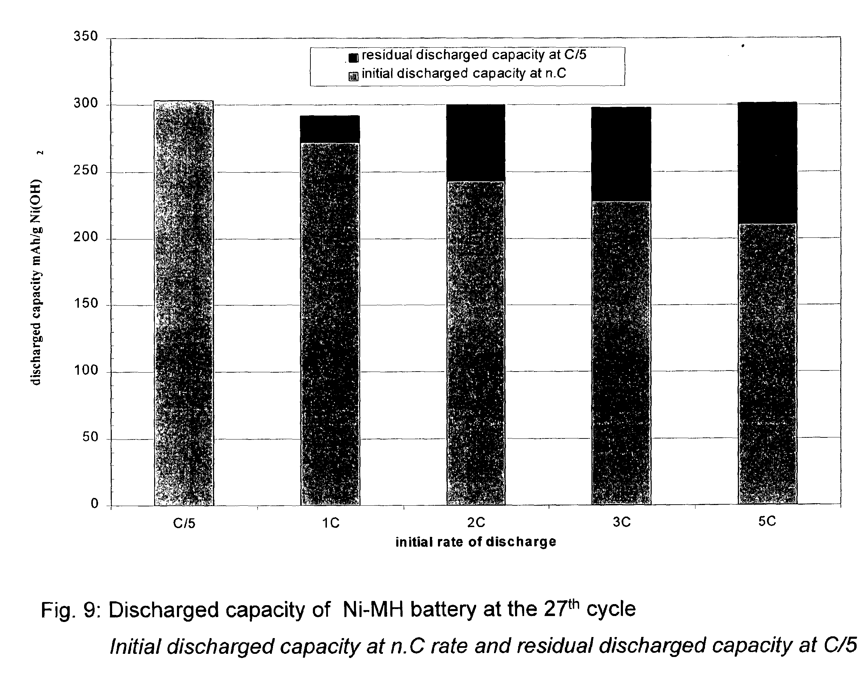

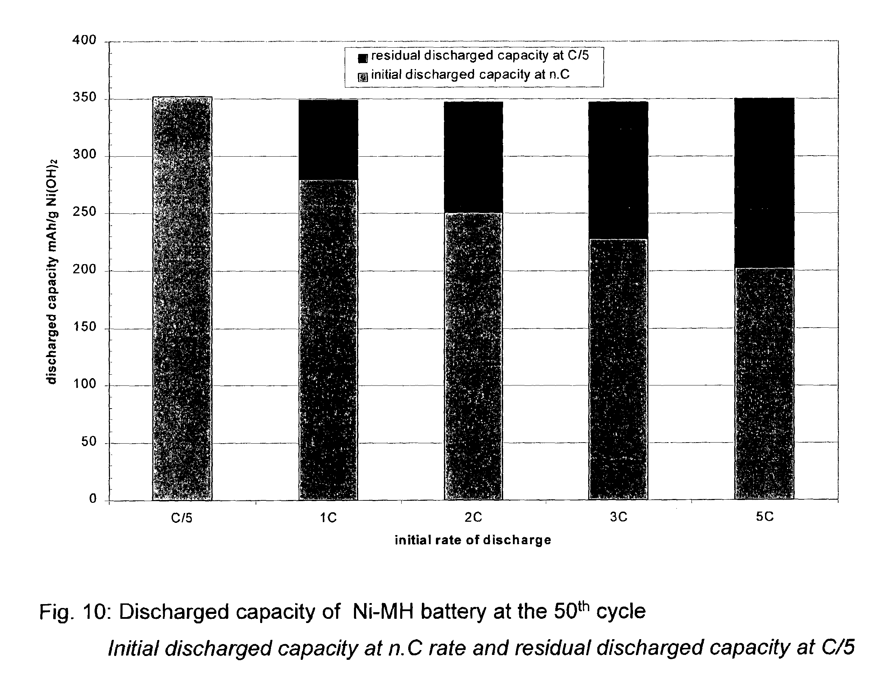

The present invention will be then described, in reference to the enclosed figures, in which:
■ Fig. 1 is a graph showing the effect of KOH electrolyte concentration on the active material utilisation rate during Ni-MH battery activation process.
■ Fig. 2 represents the exchanged electron number (EEN) versus the number of charge/discharge cycles performed by Ni-MH battery.
■ Fig. 3 shows the voltage variations of Ni-MH battery when charging at 1C rate and discharging at C/5 rate.
■ Fig. 4 shows the diffraction patterns of positive nickel electrodes in different states: (A) electrode non-employed in electrochemical test, (B) electrode in a charged state, (C) electrode in a discharged state.
■ Fig. 5 shows micro-Raman spectra of positive nickel electrodes in charged and discharged states.
■ Fig. 6 presents transversal microscopic images of discharged positive nickel electrodes before charge/discharge cycling (a) and after charge/discharge cycling (b).
■ Fig. 7 is a graph representing the charging efficiency of Ni-MH battery under different rates of charge (up to 5C).
■ Fig.8 shows the available discharged capacity of Ni-MH battery when charged at different states of charge (up to 140% charged capacity).
■ Fig. 9 shows the discharged capacities at the 27^{th} cycle (initial and residual) of Ni-MH battery when discharging at different rates.
■ Fig. 10 shows the discharged capacities at the 50^{th} cycle (initial and residual) of Ni-MH battery when discharging at different rates.

### Detailed description of the invention.

The main purpose of the present invention is to provide a Ni-MH alkaline storage battery which is capable of maintaining a high discharged capacity over 100% during long cycle life, and which may supply high power applications.

One way to achieve this goal is to increase the volumetric capacity of positive planar electrodes using high porosity substrates and preparing the electrodes by mechanical techniques, like pasting, which allows a high compression of the active material in the electrode. Irregular shaped nickel hydroxide is more suitable for such an application, and for this reason, it has been used as positive active material. Contrary to the spherical commercial nickel hydroxide, this material shows stony shaped particles and has a highly defective structure, which promotes the proton intercalation/desintercalation process and the stability of the nickel hydroxide in the alkaline potassium hydroxide electrolyte.

In order to further increase the capacity of positive nickel electrodes, it is necessary to promote the formation of NiOOH in gamma-phase, and to make particularly a good use of this higher oxide material. As described in the previous state-of-the art, a high concentration of the alkaline electrolyte promotes rapid formation of γ-NiOOH. Therefore, a high utilisation ratio of the active material is achieved in the early life of the battery. However, the formation of the γ-NiOOH in these conditions leads to the drawback of shortening the cycle life of the battery.

That is why, it has been chosen to use an initial lower concentration of alkali electrolyte, and to modify its concentration during the formation process of the battery in order to promote therefore a continuous formation of the gamma-phase NiOOH. Moreover, discharging the battery in a two-step procedure (first at high rate and then at low rate, down to a voltage of 0.6 V) provides a higher transformation of the gamma to beta phases. Thus, γ-NiOOH is used in better conditions and the cycle life of the battery can be lengthened.

Hereinafter we describe the method of manufacturing the improved nickel pasted type electrode and the assembly of high power Ni-MH alkaline storage batteries using aforesaid electrode. The formation process and the results, in terms of active material utilisation efficiency and high power performances, will be then reported.

### Method of manufacturing positive nickel pasted type electrodes.

Alkaline batteries usually used sintered nickel electrodes that are produced by sintering nickel powder in a porous substrate (of about 80% porosity). Then, the porous nickel sintered plaque is impregnated with a nickel salt solution and immersed in an aqueous alkali solution to form a nickel hydroxide active material in the porous nickel sintered substrate. The electrode of this type requires repetition of active material loading processes for several times, resulting in a complicated and thus expensive manufacturing process. Moreover, the increase of the capacity of such electrodes is limited because the porosity of the plate is difficult to increase further, so the amount of the active material loaded cannot be increased.

In order to overcome the above drawbacks, one way to increase volumetric capacity of electrodes is to use high porosity substrates, and to prepare the electrodes by mechanical techniques, like pasting, which allows a high compression of the active material in the electrode. Therefore, in recent years, manufacturers have developed a novel type of positive electrode, the pasted type one, which is widely used as the positive electrode of high capacity alkaline secondary batteries. This kind of electrode is obtained by filling nickel hydroxide active material powder into the pores of a tridimensional network having a high porosity of about 95% like nickel fibre or nickel foam substrates. When such a structure is employed, the charge and discharge reactions of the nickel hydroxide active material take place for particles near the network of the substrate where a high eletroconductivity exists. However, the nickel hydroxide particles far away from the substrate, do not work sufficiently due to a lack of conductivity between the current collector and the nickel hydroxide particles.

Therefore, in the non-sintered type positive electrode, an electroconductive agent is used in addition to the nickel hydroxide active material in order to increase the utilisation of the nickel hydroxide filled. Thus, nickel hydroxide particles are electrically connected to each other to form an electroconductive network. Usually, cobalt compounds (e.g. cobalt hydroxide and cobalt monoxide), metallic cobalt, metallic nickel, etc are used as electroconductive agents. Current paths are so formed, which improve the conductivity between the nickel substrate and the active material particles, and allow increasing the active material efficiency. The effects and key-role of Co compound additives in positive nickel pasted type electrodes have been mainly studied and mentioned in the literature *(European patents 0 918 360 and 0 866 510, US patent 5,405,714).*

In the present invention, a high tap density irregular shaped nickel hydroxide, doped in cobalt (0.5% to 5%) and zinc (0.5% to 5%), is used as active material. This material is mixed with different kinds of additives to form a liquid paste that is mechanically spread into a three dimensional network structure.

First, the nickel hydroxide powder is mixed with electroconductive agents such as, metallic nickel powder in a range of 5% to 15%, preferably 10 to 15%, cobalt powder in a range of 0.5% to 5%, cobalt oxide in a range of 0.5% to 5%, or a mixture of the last two in a proportion of 1 to 5% preferably.

On the another part, a thickener agent like arabic gum, carboxymethylcellulose, ethylcellulose or hydroxypropylmethylcellulose in a range of 0.1 to 5%, preferably 0.5 to 2%, and a binder agent, such as polytetrafluorethylene, hereinafter referred as PTFE, in a range of 1 to 10%, preferably 3 to 6%, are mixed in water solution and then added to the previous powder mixture. They prevent active material shedding off during cycling of the battery.

The resulting slurry is mixed to form a liquid paste that is filled into a foam nickel substrate having a porosity of 90 to 96%, preferably 94 to 96%. Previously, a nickel lug is spot-welded on the top of the substrate as electronic junction between the electrode and the terminal of the battery. Thereby, the obtained nickel positive electrode plate is dried and pressed, leading to a final thickness of about 0.6 to 0.8 mm and a filling density of 400 to 600 mAh/cm3. The capacity can be calculated on the assumption that the electrochemical charge/discharge reaction, taking place at the nickel electrode, involves the transfer of one electron between the couple β-Ni(OH)₂/β-NiOOH.

### Assembly of Nickel Metal Hydride alkaline storage battery.

A prismatic Ni-MH alkaline storage battery includes, within a plastic or metallic case, a stack of positive nickel electrodes and negative metal hydride electrodes, both spaced by a separator filled with an alkali electrolyte.

The positive nickel electrodes are manufactured as described previously.

Negative electrodes can be manufactured as described in *patent ES 2 130 996* by using hydrogen storage alloy powder from the mischmetal group (general formula LaMM(NiCoMnAl)₅) and a nickel fibre substrate. This current collector shows an open pore structure, due to the low content of nickel powder sintered among the fibres, which allows an easy penetration of the active material into the substrate. As for the nickel electrode substrate, a nickel lug was electrically welded on the top as electrical testing connection.

Positive and the negative electrodes are stacked one upon another with a nonwoven polyolefine separator having a thickness of 0.15 mm to 0.25 mm interposed therebetween. Each electrode group is electrically welded to the corresponding terminal and introduced into a plastic or metallic case according to the application. In the battery, the negative electrode capacity is overdimensioned 120 to 140% with regards to the positive electrode capacity, preferably 130 to 140%.

Then, the battery case was filled with an alkaline electrolyte composed of a potassium hydroxide aqueous solution, having a concentration comprised between 4 and 12 mol/l, preferably between 4.5 and 8.5 mol/l of potassium hydroxide having lithium hydroxide (LiOH) dissolved therein at a molar concentration of 1 mol/l.

Before testing, the assembled batteries were allowed to stand at an environmental temperature of approximately 25°C for 12 hours. As referred in the *European number 0 918 360,* during this standing time, cobalt hydroxide in the nickel positive electrode dissolves in the alkaline electrolyte to form cobalt complex ion that diffuses in the core of the electrode. So, it is very important after pouring the electrolyte in the battery case, to keep standing the battery without supplying the electric current at the corrosion potential of the mixed cobalt compound. Consequently, interconnection is established in the nickel hydroxide powder by the beta cobalt hydroxide. As the temperature is higher (up to 40°C), the amount of dissolution and the amount of dispersion into the nickel hydroxide active material particles are increased. Then, if the initial electric charge of the battery is carried out under the environmental temperature conditions in accordance with the rise in the electric potential of the nickel electrode, the formation of an electrically conductive network amongst the nickel hydroxide particles is obtained, which leads to a higher electroconductivity and higher discharge characteristic of the active material. Moreover, as disclosed in *European patents 0 353 837 and 0 337 029,* the high utilisation ratio of the nickel hydroxide active material can be obtained in a shorter period as the concentration of the electrolyte and the temperature increase.

### Activation process.

The activation process of batteries comprises two steps of charge/discharge cycles at room temperature. The first step includes at least two but no more five cycles, with charges at a rate of 0.05C to 1C, preferably of 0.1C to 0.3C, up to 140% of the theoretical capacity, and discharges at a rate of 0.1 to 0.3C, preferably at 0.2C down to 0.9 V, being C the theoretical capacity of the battery. The second step includes at least five cycles, with constant current charges at rate comprised between 0.5 and 3C, preferably between 1 and 1.5C, up to 140% of the theoretical capacity, and initial discharges between 0.5C and 2C, preferably between 1 and 1.5C, and residual discharges at 0.2C down to 0.6V.

The invention is now being explained with the following examples, which must not been considered as limiting the true scope of the invention. Thus, utilisation of aforesaid positive nickel electrode is not limited to a nickel-metal hydride battery described in the following examples, and is extended at every electrochemical alkaline system of power and energy which includes positives nickel electrodes: Ni-Cd, Ni-Zn, Ni-Fe,...).

### Examples.

### EXAMPLE 1

According to the previous described method, two batteries (A-B), with a nominal capacity of 15 Ah, were assembled overdimensioning negative electrodes 140%. The paste was prepared mixing 100 g of nickel based hydroxide powder doped with 1.9% cobalt and 1.4% zinc, 2.1 g of cobalt powder, 3.2 g of cobalt monoxide, and 14.8 g of nickel powder. In another part, 0.7 g of arabic gum and 5.3 g of PTFE are mixed in water solution and then added to the previous powder mixture.

### COMPARATIVE EXAMPLE 1

Three prismatic Ni-MH batteries (D-E-F) were made in the same way as in Example 1, except that an aqueous solution of KOH 7.2 mol/l having lithium hydroxide (LiOH) dissolved therein at a molar concentration of 1 mol/l, was used as electrolyte.

### COMPARATIVE EXAMPLE 2

Two prismatic Ni-MH batteries (G-I) were made in the same way as in Example 1, except that an aqueous solution of KOH 8.4 mol/l having lithium hydroxide (LiOH) dissolved therein at a molar concentration of 1 mol/l, was used as electrolyte.

### COMPARATIVE EXAMPLE 3

One prismatic Ni-MH battery (C ) was made in the same way as in Example 1, except that it was kept standing at 55°C instead of at 25°C.

One prismatic Ni-MH battery (H) was made in the same way as in comparative Example 2, except that it was kept standing at 55°C instead of at 25°C.

### COMPARATIVE EXAMPLE 4

One prismatic Ni-MH battery (J) was made in the same way as in Example 1, except that the positive active material used is a spherical nickel hydroxide material doped with cobalt (1.9%) and zinc (5%).

In each case, the aforementioned activation process has been applied, charging batteries during the two first cycles of activation at 1.5 A during 14 hours and at 3 A during 7 hours in the two following cycles, and discharging at 3 A down to 0.9 V. In these examples, effect of KOH electrolyte concentration on initial performances of the battery and temperature effect during initial relaxation time of the battery have been analysed.

After the initial activation, batteries have been tested in the following conditions:
- Charge at 15 A during 1 h 24 min (140%charged capacity)
- Rest during 15 min
- Discharge at 15 A down to 0.6 V
- Rest during 15 min
- Residual discharge at 3 A down to 0.6 V
- Rest during 15 min.

Batteries were overcharged up to 140% of the nominal capacity with the main goal of promoting γ-NiOOH formation since, as previously mentioned, gamma-phase is preferably formed when usual overcharging is repeated. Then, discharging the battery in two steps down to 0.6 V may promote the complete discharge of the γ-NiOOH into the β- Ni(OH)₂. Moreover, it is mentioned that, in order to maintain a continuous γ-NiOOH formation, electrolyte concentration of batteries of Example 1, has been modified during this formation process.

### Results.

Tables 1 and 2 present the results obtained in the discharge carried out after the first step of activation, indicated as the active material utilisation ratios, considering the theoretical transfer of one electron.

**Table 1.**

| *Active material utilisation (%) for batteries kept standing at 25°*. | | | |
|---|---|---|---|
| Battery samples | Initial electrolyte concentration (mol/l) | Temperature | Active material utilisation (%) |
| Battery A | KOH 4.6 M+LiOH | | 90% |
| Battery B | 1 M | 25°C | 90% |
| Battery J | KOH 4.6 M+LiOH 1 M | 25°C | 96% |
| Battery D | KOH 7.2 M+LiOH 1 M | 25°C | 96% |
| Battery E | | | 99% |
| Battery F | | | 99% |
| Battery G | KOH 8.4 M+LiOH 1 M | 25°C | 104% |
| Battery I | | | 102% |

**Table 2.**

| ***Active material utilisation (%) for batteries kept standing at 55°.*** | | | |
|---|---|---|---|
| Battery samples | Initial electrolyte concentration (mol/l) | Temperature | Active material utilisation (%) |
| Battery C | KOH 4.6 M+LiOH 1 M | 55°C | **82%** |
| Battery H | KOH 8.4 M+LiOH 1 M | 55°C | **98%** |

The data includes in tables 1 and 2 show clearly that the higher the electrolyte concentration, the higher the utilisation of the nickel active material: the best discharged capacities (referred as the best active material utilisation ratios) are obtained for batteries of comparative example 2, whose KOH concentration is 8.4 M. Thus, considering only the data of table 1, we observe that the active material utilisation is higher than 100% if the concentration is 8.4 M, while it goes down to 99% and to 90% for KOH concentrations of 7.2 M and 4.6 M respectively. Compared to the new irregular shaped nickel hydroxide material (batteries A and B), the spherical nickel hydroxide (battery J) shows better results in terms of initial active material utilisation (96% versus 90%).

Referring to the temperature during the standing period of the batteries, it can be noted that keeping standing the battery at 55°C instead of 25°C has a negative effect since it leads to a lower utilisation of the active material. For example, comparison between battery B and C, kept standing at 25°C and 55°C respectively, points out a loss of 8% in the utilisation of the active material. Therefore, batteries must be kept standing during 12 hours at an environmental temperature of 25°C. This standing condition constitutes an important process in the formation of an electroconductive network between the nickel hydroxide particles and the current collector, where cobalt additives take part as a key-element.

The high utilisation ratio of the nickel active material is linked with the formation of the gamma-phase NiOOH, that exchanges during electrochemical charge/discharge cycling more than one electron. Therefore, the present results agree with the fact that the higher concentration of electrolyte is, the easier the formation of gamma-phase is.

Nevertheless, if the concentration of the electrolyte used is too high, a part of the gamma-phase will become inert, and the utilisation of the active material will fall down. Even in such a case, the utilisation of the nickel particles is higher than the theoretical capacity, the inert gamma-phase will accumulate if charge/discharge cycles are repeated, which leads to shortening the cycle life of the battery.

Figure 1 presents the results of the active material utilisation ratios versus the cycle number for one battery of Example 1 and comparative Examples 1, 2 and 4. As shown in the figure, during the first 30 cycles, the best results in terms of active material efficiency are obtained for batteries G and E that have a KOH concentration higher than 4.6 M (8.4 M and 7.2 M respectively). Nevertheless, it can be observed that beyond the 25th cycle, the utilisation ratio of batteries G and E decreases slowly and falls below 100% efficiency. Cycling test has gone on up to the 50th cycle and then stopped as the utilisation rate was only 60%. As mentioned previously, if the concentration is too high, like 8.4 M, a part of the gamma-phase becomes inert, even though batteries are discharged down to 0.6 V. γ-NiOOH, whose formation is promoted in the early life of the battery due to the high concentration of the electrolyte, accumulates with the repetition of charge/discharge cycles and leads to a decrease of its utilisation.

However, as regard to the battery B (initial KOH 4.6 M), a different behaviour is observed. Even though the utilisation ratio is lower during the early life of the battery (more or less 90% during the first 5 cycles), it increases to over 105% as the battery cycle life goes on, with modifications of KOH electrolyte concentration. This behaviour is not observed with the spherical nickel hydroxide material from Tanaka (battery J) which presents an utilisation rate of about 95%, but in any case lower than 100%.

It can be concluded that cycling the battery in the previously described conditions allows the irregular shaped nickel hydroxide active material to reversibly cycle between the discharged beta-phase and the charged gamma-phase, result which is not observed with the spherical nickel hydroxide Ni(OH)₂.

Therefore, one solution to make a good use of this γ-NiOOH is:
■ First, activate its continuous formation using a concentration of KOH and LiOH electrolyte that increases with the cycle number,
■ Secondly, discharge the gamma-material at high and low current intensities down to a voltage of 0.6 V.

Figure 2 shows the evolution of the exchanged electron number (EEN) versus the cycle number performed by the battery B from example 1 (KOH 4.6 M - 25°C). After carrying out more than 50 cycles during the formation process, the battery has been cycled, charging at 1C up to 140% charged capacity and discharging at 0.2C down to 0.6 V. As it can be seen on fig. 2, battery B has performed more than 200 cycles with an EEN over 1 (1 corresponding to 100% utilisation of the active material). Even though there is a slight decrease of the EEN at cycle number 200, it still remains over 1. A maximum of 360 mAh/g of nickel active material has been obtained.

Figure 3 presents the voltage evolution of battery B when charged at 1C and discharged at 0.2C down to 0.6 V. As shown, the total discharged capacity corresponds to an active material utilisation rate of 123%, i.e. a discharged capacity of about 355 mAh/g of nickel material. Moreover, it can be pointed out that discharged capacity below 1.0 V is non significant, as the main discharged overcapacity occurs for a voltage close to 1.05 V. Contrary to the studies mentioned in the literature, this result proves that γ-NiOOH can be discharged at voltages over 1.0 V, if formed in adequate conditions such as described in the present invention.

### Characterisation of the positive nickel electrodes.

Several positive nickel electrodes from battery A (from example 1) have been analysed by different techniques, after performing more than 150 charge/discharge cycles.

Figure 4 (A) is an X-ray diffraction pattern of an unused electrode material (at the initial discharged state). As expected the X-ray diffraction pattern of this uncycled electrode is clearly characterised by the presence of the only β-Ni(OH)₂ showing lines corresponding to 2θ angles at 19°, 32°, 38°, 59°, and 63°.

Figure 4 (B) shows the X-ray diffraction pattern of nickel electrode material in a fully charged state (with 160% overcharging). It presents new peaks, characteristic of the gamma-phase NiOOH having lines 2θ angles at 13°, 25°, and 65°. It can be pointed out the absence of beta-phase lines previously described. Moreover, no peak referring to the NiOOH beta-phase formation is observed. This suggests that most of the active material has been uniformly converted in the γ-NiOOH.

Figure 4 (C) shows the X-ray diffraction pattern of nickel electrode material after discharging the electrode down to 0.6 V. It shows characteristic peaks of both phases, a mixture of discharged β-Ni(OH)₂ and undischarged γ-NiOOH. This means that, despite the delivered capacity is larger than the theoretical capacity corresponding to the beta(II)/beta(III) system, a part of the active material has still to be discharged and consequently a higher discharged capacity may be expected.

These results are well supported by the µ-Raman spectra of nickel electrodes, presented in figure 5. Indeed, the discharged electrode spectra point out the presence of both β-Ni(OH)₂ and γ-NiOOH phases, while µ-Raman spectrum of charged electrode is characterised by γ-NiOOH peaks. Moreover, it can be observed a slight peak in the 1000 cm⁻¹ range corresponding to the presence of carbonate ions, intercalated between the nickel intersheets. In fact, in the β-Ni(OH)₂/β-NiOOH system, the electrochemical process involves only one ionic species, a proton (H⁺) that intercalates and desintercalates between the nickel intersheets. However, the process is much more complicated in the β-Ni(OH)₂/γ-NiOOH system, since cations, anions and water molecules must be intercalated or desintercalated during the overall reaction, as the intersheet distance is higher.

Energy Dispersive Spectrometry analyses have been also carried out in order to determine the elements and their relative amounts inside the electrode. The obtained results (reported as atomic percentage) are presented in table 3.

**Table 3:**

| ***Elements and their relative amounts (reported as atomic percentage) obtained by Energy Dispersive Spectrometry analysis of positive nickel electrodes.*** | | | |
|---|---|---|---|
| Analysed elements | Electrode (A) **Non-employed** | Electrode (B) **Charged state** | Electrode (C) **Discharged state** |
| Ni | 94% | 72% | 76% |
| **K** | **-** | **20%** | **13%** |
| Other elements | 6% | 6% | 11% |

As shown in the above table, the amount of potassium element changes with the state of charge of the nickel electrode. As expected, no potassium is present in the nickel electrode (A) non employed in the battery and used as reference. However, it can be observed that the amount of potassium in the electrode changes between a charged state (20%) and a discharged state (13%). Thus, there is a larger amount of potassium in the fully charged electrode, suggesting γ-NiOOH formation. On the other side, the decrease of potassium amount in the discharged electrode seems to indicate a conversion of the gamma-phase to the beta-phase.

Figures 6.a. and 6.b shown respectively microscopic images (growth 50) of positive nickel electrodes in a discharged state before cycling (a) and after cycling (b). Figure 6.a. shows the good penetration of the active material inside the nickel foam substrate (that appears in white colour). The initial thickness of such pressed electrode is 0.6 mm, which leads to an electrode density energy higher than 600 mAh/cc. In figure 6.b., it can be pointed out the presence of dark areas, located preferably in the core region of the electrode. In agreement with the analysis of X-ray diffraction patterns of figure 4 (C ) and the analysis of the µ-Raman spectra, it can be supposed that these areas may represent the residual undischarged γ-NiOOH phase.

In conclusion, the different structural analysis carried out on positive nickel electrodes of battery from example 1, confirm that the irregular shaped nickel hydroxide material is capable to reversibly cycle between the beta-phase and the gamma-phase during an improved cycle life, if formed with the formation process described in the present invention.

### Performances of Ni-MH battery (Example 1).

Hereinafter are presented the results of the electric tests carried out on the Ni-MH battery from Example 1. Tests have been performed for high charge and high discharge rates in order to demonstrate the good performance of this Ni-MH battery that is capable to comply with the high current requirements for high power applications. All the capacity results are presented in mAh/g of nickel active material, in comparison with the theoretical capacity of 289 mAh/g Ni(OH)2.

### □ Charge efficiency of the battery under different rates of charge

The battery was charged up to 140% of charged capacity at different rates, comprised between 0.2C and 5C, being "C" the theoretical capacity of the battery (15 Ah), which correspond to the transfer of one electron between the β-Ni(OH)₂ and the β-NiOOH. After each charge, the battery was discharged at 3 A (0.2 C rate) down to a voltage of 0.6 V. The results of discharged capacities are represented in figure 7. First of all, it must be pointed out that, independently of the charge rate, the discharged capacity is higher than the theoretical one. As shown, the best discharged capacity (358 mAh/g) is obtained when the battery is charged at the 1C rate. Those results support the ability of the Ni-MH battery to be charged at high rates, and to deliver a high discharge capacity. Quick charges (5C rate) can be carried out, recovering 100% of the theoretical battery capacity.

### □ Available discharged capacity of the battery when charged at different states-of-charge

The test was carried out charging the battery at the 1C rate (15 Ah) up to different states of charge (comprised between 50% and 140%). Then, the battery was discharged at 3 A down to 0.6 V, and the available discharged capacity was determined. Results are shown on figure 8. From charged capacity comprised between 50% and 100%, the available discharge capacity is about 95% of the theoretical capacity. Overcharging the battery improves the available discharged capacity, and beyond 110% of charged capacity, it becomes higher than 100%. The best result was obtained when the battery was overcharged up to 140%.

### □ Discharged capacity of the battery at different rates

A high discharge rate test was performed to evaluate the capability of the battery to supply high current intensities for high power applications. After charging the battery at 15 A (1C rate) up to 140%, the battery was discharged at different rates (comprised between 0.2C and 5C which correspond to 3 A and 7.5 A respectively) and then discharged at 0.2C rate in order to recover a residual capacity. Results of tests performed at the 27^{th} cycle and the 50^{th} cycle are presented in figures 9 and 10 respectively. As shown in both figures, the higher the rate of discharge, the lower the initial discharge capacity and the higher the residual discharge capacity. Comparison between fig. 9 and fig. 10 indicates a higher formation of gamma-NiOOH at the 50^{th} cycle, since the total discharged capacity is more or less 350 mAh/g instead of 300 mAh/g at the 27^{th} cycle. It can also be noted that, even though the total discharged capacity is increased by the presence of the gamma-phase, the initial discharged capacity is almost constant in both cases. It reaches a value over to 200 mAh/g at 5C rate, which corresponds to an efficiency higher to 70%. Therefore, besides delivering at least 70% of its theoretical capacity at high rates, the battery is capable to deliver 50% residual capacity.

## Claims

1. An alkaline secondary battery such as Ni/MH, Ni/Cd, Ni/Zn, Ni/Fe which comprises an improved positive pasted type nickel electrode, a negative electrode, an alkaline electrolyte, a separator and a plastic or metallic container, wherein the said positive electrode includes a high tap density irregular shaped nickel hydroxide as active material, having a high crystalline structure defects and doped in Co and Zn in a range of 0.5 to 5% in both cases, a three-dimensional metallic network as conductive substrate such as nickel foam or nickel fibre which presents a porosity of 90 to 96%, preferably 94 to 96%, and which also includes additives in a total range of 7 to 40% in order to improve electrode paste rheology and electroconductivity.

2. A battery as claimed in claim 1, wherein the active material composition of the aforesaid positive electrode includes cobalt compounds, such as cobalt powder or cobalt monoxide or a mixture of both, in a range of 0.5 to 10 wt.% of nickel hydroxide, preferably 1 to 5%, metallic nickel powder in a range of 5 to 15%, preferably 10 to 15%, a suspension of polytetrafluoretylene in a range of 1 to 10%, preferably 3 to 6%, and arabic gum, carboxymethylcellulose, ethylcellulose o hydroxypropylmethylcellulose in a range of 0.1 to 5%, preferably 0.5 to 2%.

3. A battery as claimed in claims 1 and 2, wherein the alkaline electrolyte is selected amongst an aqueous sodium hydroxide solution, an aqueous potassium hydroxide, a mixed aqueous solution of sodium hydroxide and potassium hydroxide, and a mixed aqueous solution of at least one member selected from the group consisting of sodium hydroxide and potassium hydroxide and at least one member selected from the group consisting of rubidium, cesium, and lithium hydroxide, in concentration comprised between 4 and 12 mol/l, preferably between 4.5 and 9 mol/l.

4. An activation process of the said secondary alkaline battery claimed in claims 1 to 3, in order to achieve a specific capacity superior to the expected theoretical one corresponding to the transfer of one electron between the beta-phases of the nickel hydroxide and the nickel oxyhydroxide (β-Ni(OH)₂ and β-NiOOH respectively), which involves the reversible transformation of the β-Ni(OH)₂ to γ-NiOOH phases, and which comprises the following steps:
• A first step, including at least two but no more five charge/discharge cycles, carried out with charges at a rate comprised between 0.05 and 1C, preferably between 0.1 and to 0.3C, being C the theoretical capacity of the battery, up to 140% of theoretical capacity, and discharges at a rate comprised between 0.1 and 0.3C, preferably 0.2C down to 0.9 V; and
• A second step, including at least five cycles, carried out with charges at a rate comprised between 0.5 and 3C, preferably between 1 and 1.5C, up to 140% of theoretical capacity, and initial discharges at a rate comprised between 0.5 and 2C, preferably between 1 and 1.5C, and residual discharge at a rate 0.2C down to 0.6 V;
• During the aforementioned activation process, the concentration of the alkaline hydroxide dissolution used as electrolyte, is modified in the range of 4 to 12 mol/l, preferably between 4.5 and 9 mol/l.
